# EUROPEAN PATENT SPECIFICATION

(11) **EP 0 493 121 B1**
(45) Date of publication and mention of the grant of the patent: **10.07.1996**
(21) Application number: 91312038.2
(22) Date of filing: 24.12.1991
(51) Int. Cl.: C08G 75/02, C08L 81/02, C08K 3/00

(54) **Treatment of polyarylene sulfide resins**
Behandlung von Polyarylensulfidharzen
Traitement de résine de polysulfure d'arylène

(30) Priority: 27.12.1990 JP 415067/90
(43) Date of publication of application: 01.07.1992
(73) Proprietor: Tosoh Corporation, Shinnanyo-shi, Yamaguchi-ken, 746 (JP)
(72) Inventor: Muneto, Toshihiko, Yokkaichi-shi, Mie-ken (JP); Kato, Toshikazu, Yokkaichi-shi, Mie-ken (JP); Inoue, Hiroshi, Yokkaichi-shi, Mie-ken (JP)
(74) Representative: Kearney, Kevin David Nicholas

(56) References cited:
- EP-A- 0 280 325
- EP-A- 0 364 181
- EP-A- 0 427 134
- DE-A- 3 143 992
- PATENT ABSTRACTS OF JAPAN vol. 8, no. 260 (C-254)(1697) 29 November 1984 (SUMITOMO KAGAKU KOGYO) 4 August 1984

## Description

This invention relates to a method for treating polyarylene sulfide resins and in particular to such a method by which the corrosive properties of the resins can be effectively reduced or diminished.

Polyarylene sulfide resins exhibit excellent heat and chemical resistance properties and high fire-retardant properties and, hence, have attracted a good deal of attention as engineering plastics. The resins have been in increasing demand in various fields where the above-mentioned properties are wanted; for example, in the production of electrical and electronic parts, automotive parts, films, sheets and fibers. The resins have also good molding and forming characteristics and high insulation properties. In order to meaningfully enjoy these advantageous properties of the polyarylene sulfide resins when employed in practice, it would be required to diminish or substantially eliminate the corrosive properties of the resins. For example, where the resins are used as covering or encapsulating material for electronic parts, the material could corrode the electrode, wiring, conductor, leading frame and other metallic elements of the parts in use and often could result in functional trouble of the parts.

As a means to reduce the corrosive properties, it has been proposed to chemically treat polyarylene sulfide polymers after polymerization or a further purification stage. For example, Japanese Patent Application KOKAI 57-108136 describes a method for treating a polyarylene sulfide polymer which has been polymerized and purified, which comprises washing the polymer in an aqueous slurry containing a salt of a metal from Group IA, II or IIIA of the periodic table, an organic acid, ammonia, a basic ammonia compound, or an alkali metal or alkaline earth metal hydroxide. Japanese Patent Application KOKAI 62-36425 describes a treatment method comprising mixing a polyarylene sulfide resin with an inorganic ion-exchanger in the presence of deionized water and/or N-methyl-2-pyrrolidone and heating the mixture. However, these known methods do not appear to be effective to sufficiently reduce the corrosive property of the polyarylene sulfide resins. Therefore, it is necessary to repeatedly conduct the same procedure to lower the corrosive property down to an acceptable level. Thus, the known methods would not be applicable in practice.

It is also known that zinc compounds are added to polyarylene sulfide resins; see, for example Japanese Patent Application KOKAI 1-135866. In this KOKAI specification, a polyarylene sulfide resin is melt-kneaded with zinc carbonate so as to retard the corrosive property and also stabilize the color tone. However, since polyarylene sulfide resins exhibit high melting temperature, the zinc carbonate additive, which decomposes at 300°C while evolving carbon dioxide gas, tends to produce bubbles in the molded or shaped product and hence to lower the mechanical strength of the product and roughen the surface of product with the bubbles. These present problems in practice.

An object of the invention is to substantially eliminate the difficulties experienced with the prior art technique.

Another object of the invention is to provide an improved method for treating polyarylene sulfide resins so as to substantially lower the corrosive property.

A further object of the invention is to provide polyarylene sulfide resins which are less corrosive than the conventional similar resins.

In view of the status of prior art as above-discussed, we have intensively studied and researched to lower the metal corrosive property of polyarylene sulfide resins. Consequently, it has been found that the nuisance corrosive property is effectively lowered by mixing and heating polyarylene sulfide resins with zinc carbonate and an alkaline earth metal chloride in an aqueous solvent.

According to the present invention there is provided a method for treating polyarylene sulfide resins which comprises mixing and heating a polyarylene sulfide resin with zinc carbonate and an alkaline earth metal halide, e.g. a chloride, in an aqueous solvent, the zinc carbonate and alkaline earth metal chloride being present in proportions of 0.01% - 10% and 0.006% - 23.6% by weight, respectively, on the basis of the total weight of the resin, zinc carbonate and alkaline earth metal halide, e.g. a chloride.

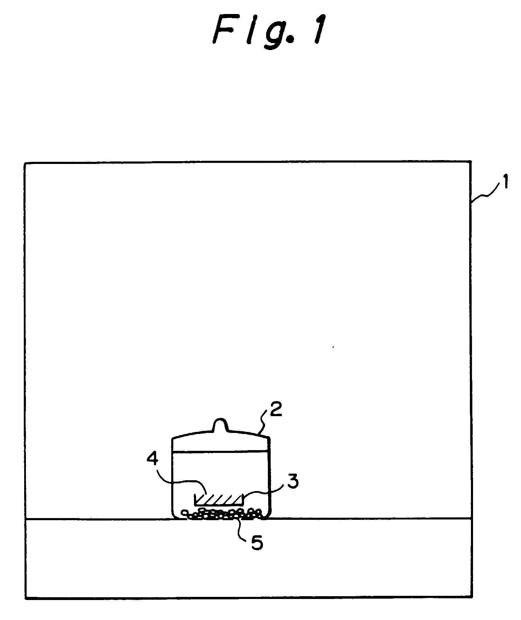

Figure 1 schematically shows an experimental apparatus in which the corrosive properties of polyarylene sulfide resins are assessed in the following Examples.

The polyarylene sulfide resins which may be treated in accordance with the invention include ones which contain repeating units represented by the general formula -Ar-S-. Particular examples of -Ar-S- which may be mentioned include the following structural units: 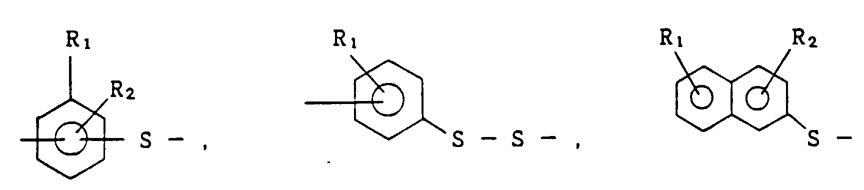 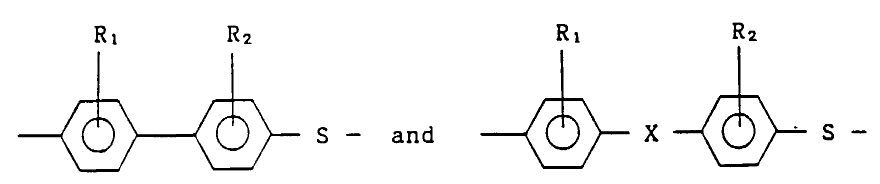 wherein each of R₁ and R₂ represents independently a hydrogen or a halogen atom, or an alkyl, phenyl, alkoxy, nitro, alkyleneglycol, hydroxyl, nitrile, carboxyl, sulfone or amino group and X represents a methylene, ethylene, isopropyl, ether, ketone or sulfone group.

Of these, a polyphenylene sulfide resin is particularly preferred. The polyphenylene sulfide resin may be one which contains at least 70 mole %, preferably at least 90 mole %, of repeating unit of the structure 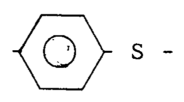 and optionally one or more other copolymerized units.

Usually, polyarylene sulfide resins include a class of relatively low molecular weight polymers which may be prepared by the known methods disclosed typically in Japanese Patent KOKOKU 44-2761; Japanese Patent KOKOKU 45-3368; United States Patent 3,274,165; Japanese Patent KOKOKU 46-27255, etc., and a class of relatively high molecular weight, substantially linear polymers which may be prepared by the known methods disclosed, for example, in Japanese Patent KOKOKU 52-12240. The former class of polymers may be further polymerized by heating them either under an oxygen-containing atmosphere or in the presence of a cross-linking agent such as a peroxide, before they are used in the present invention.

The substantially linear, relatively high molecular weight polyarylene sulfide resins which are suitable for use in the invention have a melt viscosity in the range of about 50 - 50,000 poises, preferably 100 - 30,000 poises as measured in a KOHKA type flow tester at 300°C using an orifice of a 0.5 mm diameter and a 2 mm length under a 10 kg load. The relatively low molecular weight polymers which are further polymerized by heating under an oxygen-containing atmosphere or in the presence of a cross-linking agent before use in the invention may have a melt viscosity in the range of about 50 - 20,000 poises before that heating and an increased melt viscosity in the range of about 150 - 50,000 poises, preferably 200 - 30,000 poises, after that heating and further polymerization. Melt viscosities of less than about 50 poises tend to give rise to undesirably low mechanical strength of the product. On the other hand, melt viscosities of greater than about 50,000 poises tend to adversely affect the molding and forming characteristics.

The zinc carbonate agent used in the invention is zinc carbonate or zinc carbonate hydroxide which may be prepared by various processes and may be represented by the general formula:

xZnCO₃·yZn(OH)₂·nH₂O

wherein x is from 1 to 3, y is from 0 to 6 and n is from 0 to 6, or more preferably x is from 1 to 3 and y is 1 or more, also n may be 1 or more.

Preferably, the zinc carbonate is added in the range of 0.1 - 5% by weight and the alkaline earth metal halide is added in the range of 0.06% - 11.8% by weight. Although the relative proportions of the zinc carbonate and alkaline earth metal halide are not critical, preferably they both are used in equimolar quantities, resulting in significantly advantageous effects.

If the zinc carbonate and alkaline earth metal chloride are added in proportions of less than 0.01% and less than 0.006% by weight, respectively, the corrosive properties would not be lowered to an appreciable extent. On the other hand, if the both are added in proportions of greater than 10% and greater than 23.6% by weight, respectively, then the mechanical strength of the products molded or formed from the resin would be lowered.

Examples of the alkaline earth metal halides, e.g. chlorides which may be used include beryllium, magnesium, calcium, strontium, barium and radium chlorides which may be either in the anhydrous or hydrated form. Especially barium chloride is preferred.

The "aqueous solvent" as used herein means a solvent comprising essentially water and includes distilled water, ion-exchanged water and the like. The aqueous solvent may further comprise a water-soluble organic solvent or solvents, for example, organic acids, such as acetic acid; alcohols, such as methanol, ethanol and isopropyl alcohol; ketones, such as acetone and methyl ethyl ketone; or amides, such as dimethyl acetamide and N-methyl-2-pyrrolidone. Especially preferred aqueous solvents include distilled water and ion-exchanged water.

The conditions under which the polyarylene sulfide resin is thermally treated with the additive or additives in the aqueous solvent in accordance with the invention may be appropriately selected or varied dependent upon the melt viscosity of resin used, the concentration of solution, the treatment temperature, the treatment time, and the quantity of additive or additives.

Usually the concentration of solution, i.e. "the total weight of the polyarylene sulfide resin and additive or additives/the weight of solvent" ranges from 7% to 50%, preferably 10% to 40%, by weight. If the concentration of solution is lower than 7% by weight, the present methods show an uneconomically low productivity rate. On the other hand, if the concentration is higher than 50% by weight, then trouble would be expected to occur in the processing apparatus.

The treatment time ranges from one minute to 24 hours, preferably from 10 minutes to 10 hours. If the treatment time is shorter than one minute, the corrosive property would not be appreciably retarded. If the treatment time is longer than 24 hours, the process would not be preferred from an economical point of view. However, the treatment time may be reduced by raising the treatment temperature.

The treatment temperature should be raised as high as possible and ranges particularly from 130°C to 250°C, preferably from 150°C to 220°C. If the treatment temperature is lower than 130°C, the resin is liable not be sufficiently treated to significantly reduce the corrosive properties. If the treatment temperature is higher than 250°C, a pressure vessel would be necessary to effect the treatment and this would make the operation complicated and expensive.

The present methods may be conducted by appropriately selecting the above-listed ingredients and conditions.

The structure of the apparatus in which the present invention is effected is not critical, provided it comprises a vessel fitted with heating means and agitating means. Preferably, the vessel is of a sealed type.

The polyarylene sulfide resin which has been thermally treated in accordance with the present invention may be recovered through further steps, such as removal of solvent, drying and so on.

According to a further aspect of the invention, there is provided an improved polyarylene sulfide resin which has been treated by the present method.

The present invention will be illustrated in more detail with reference to the following non-limiting Examples accompanied by comparative Examples, and the drawings, Figure 1, which is a diagrammatic cross sectional view of apparatus for testing for corrosive properties of resins.

In the Examples, the polyarylene sulfide resins were tested for the corrosive properties using the following test method.

### Corrosion Test

10 gr of a PPS powder 5 was placed in a weighing bottle 2. On the bed of PPS powder 5, was placed a petri dish 3 in which solder-plated the leading frames 4 were disposed. Then the thus assembled weighing bottle 2 was heated at 150°C for 500 hours in an oven 1. Thereafter, the degree of corrosion on the surfaces of leading frames was visually rated in accordance with the following four grades.

Rating:
- I:: no discoloration
- II:: slightly grayish discoloration
- III:: grayish discoloration
- IV:: dark discoloration

The polyphenylene sulfide resin (referred to as PPS) materials used in the Examples were prepared as follows:

### Preparation 1

A 15-ℓ capacity autoclave was charged with 1.8 moles of Na₂S·2.9H₂O and 4.5 kg of N-methyl-2-pyrrolidone (referred to as NMP). The mixture was heated to 200°C under a stream of nitrogen with stirring so as to distill off 636 g of a distillate consisting mainly of water. The reaction system was cooled down to 170°C, to which 1.8 moles of p-dichlorobenzene was added together with 1.5 kg of NMP. The reaction system was sealed under a stream of nitrogen and heated to 250°C to allow the reactants to polymerize at this temperature for a period of 3 hours. On completion of the polymerization, the system was cooled and the contents were poured into water so as to precipitate the product polymer. Then the precipitated polymer was collected by means of glass funnel, and then repeatedly washed and filtered using about 10 ℓ of warm water, and thereafter hot-vacuum dried overnight. The thus isolated polymer was obtained in a quantity of 1.85 kg corresponding to a yield of 95%. The polymer had a melt viscosity of 250 poises as measured in a KOHKA type flow tester at 300°C using an orifice of a 0.5 mm diameter and a 2 mm length under a 10 kg load. This product will be referred to as PPS-1.

### Preparation 2

A part of the polymer PPS-1 was placed in an oven set at a temperature of 250°C. Then the material was allowed to cure or crosslink in air for 5 hours within the oven. This procedure produced a PPS having an increased melt viscosity of 2800 poises. This product will be referred to as PPS-2.

### Examples 1 - 3 These are comparison examples.

A 300 mℓ-capacity autoclave was charged with distilled water, PPS-1 from Preparation 1, and a commercially available zinc carbonate manufactured by Wako Junyaku Kogyo Ltd., in various quantities as indicated in Table 1. The inner gaseous space of the autoclave was replaced with nitrogen gas. Then the contents were heated and stirred under the conditions as listed in Table 1. Thereafter, the contents were cooled and the treated polymer was washed with hot water thrice. The polymer was dried at 80°C for one day. The thus resulting PPS powders were each tested for their corrosive properties in accordance with the above-described test procedure. The results are shown in Table 1.

### Examples 4 - 6

A 300 mℓ-capacity autoclave was charged with distilled water, PPS-1 from Preparation 1, a commercially available zinc carbonate manufactured by Wako Junyaku Kogyo Ltd., and barium chloride manufactured by Wako Junyaku, in various quantities as indicated in Table 1. The inner gaseous space of the autoclave was replaced with nitrogen gas. Then the contents were heated and stirred under the conditions as listed in Table 1. Thereafter, the contents were cooled and the treated polymer was washed with hot water thrice. The polymer was dried at 80°C for one day. The thus resulting PPS powders were each tested for their corrosive properties in accordance with the above-described test procedure. The results are shown in Table 1.

### Examples 7 - 9 These are comparison examples.

The procedure as described in Examples 1 - 3 was repeated except that PPS-2 from Preparation 2 was used in place of PPS-1 from Preparation 1. Each of the resulting PPS powders was tested for its corrosive properties. The results are shown in Table 1.

### Examples 10 - 12

The procedure as described in Examples 4 - 6 was repeated except that PPS-2 from Preparation 2 was used in place of PPS-1 from Preparation 1. Each of the resulting PPS powders was tested for its corrosive properties. The results are shown in Table 1.

### Comparative Example 1

A 300 mℓ-capacity autoclave was charged with 100 g of distilled water and 10 g of PPS-1 from Preparation 1. The inner gaseous space of the autoclave was replaced with nitrogen gas. Then the contents were heated and stirred at 200°C for 30 minutes. Then the contents were cooled and the treated polymer was washed with hot water thrice. The polymer was dried at 80°C for one day. The thus resulting PPS powder was tested for its corrosive properties in accordance with the above-described test procedure. The results are set forth in Table 2.

### Comparative Example 2

The procedure of Comparative Example 1 was repeated except that PPS-2 from Preparation 2 was used in place of PPS-1 from Preparation 1. The resulting PPS powder was tested similarly. The results are set forth in Table 2.

### Comparative Example 3

The procedure of Comparative Example 1 was repeated except that calcium carbonate ("Whiton" P-30 available from Shiraishi Kogyo Ltd.) was used in place of the zinc carbonate. The resulting PPS powder was tested similarly. The results are set forth in Table 2.

### Comparative Example 4

The procedure of Example 7 was repeated except that calcium carbonate ("Whiton" P-30) was used in place of the zinc carbonate. The resulting PPS powder was tested similarly. The results are set forth in Table 2.

### Comparative Example 5

The procedure of Example 4 was repeated except that calcium carbonate ("Whiton" P-30) was used in place of the zinc carbonate. The resulting PPS powder was tested similarly. The results are set forth in Table 2.

### Comparative Example 6

The procedure of Example 10 was repeated except that calcium carbonate ("Whiton" P-30) was used in place of the zinc carbonate. The resulting PPS powder was tested similarly. The results are set forth in Table 2.

As above-illustrated, according to the present invention, the corrosive properties of polyarylene sulfide resins are effectively reduced to a very significant extent by relatively simple and economical means. The treated polyarylene sulfide resins according to the invention are expected to be useful and advantageous in fields where metal corrosion problems were experienced with the conventional polyarylene sulfide materials.

The zinc carbonate used in Examples 1 - 12 had the chemical composition:

2 ZnCO₃·3 Zn(OH)₂·H₂O

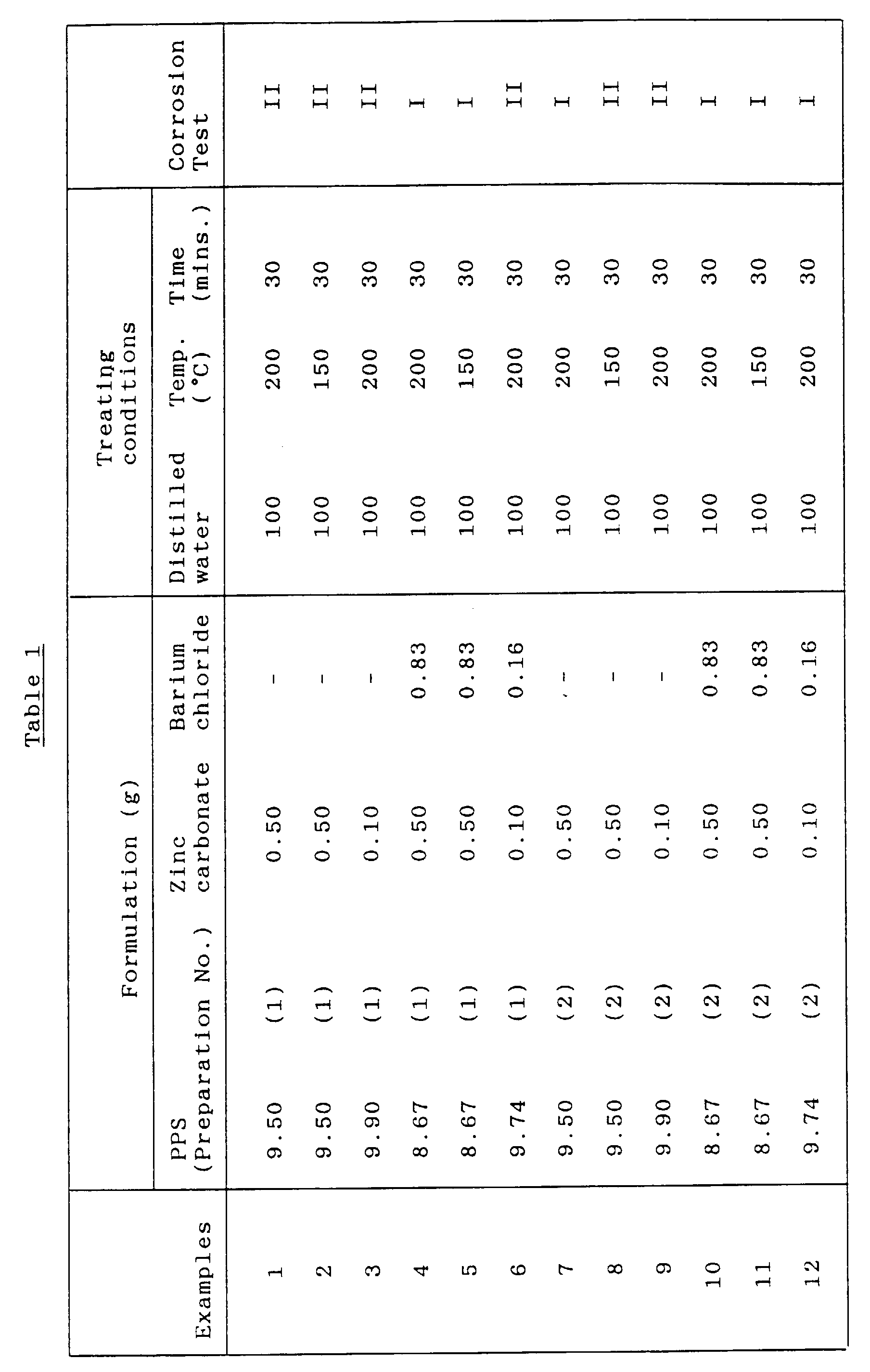

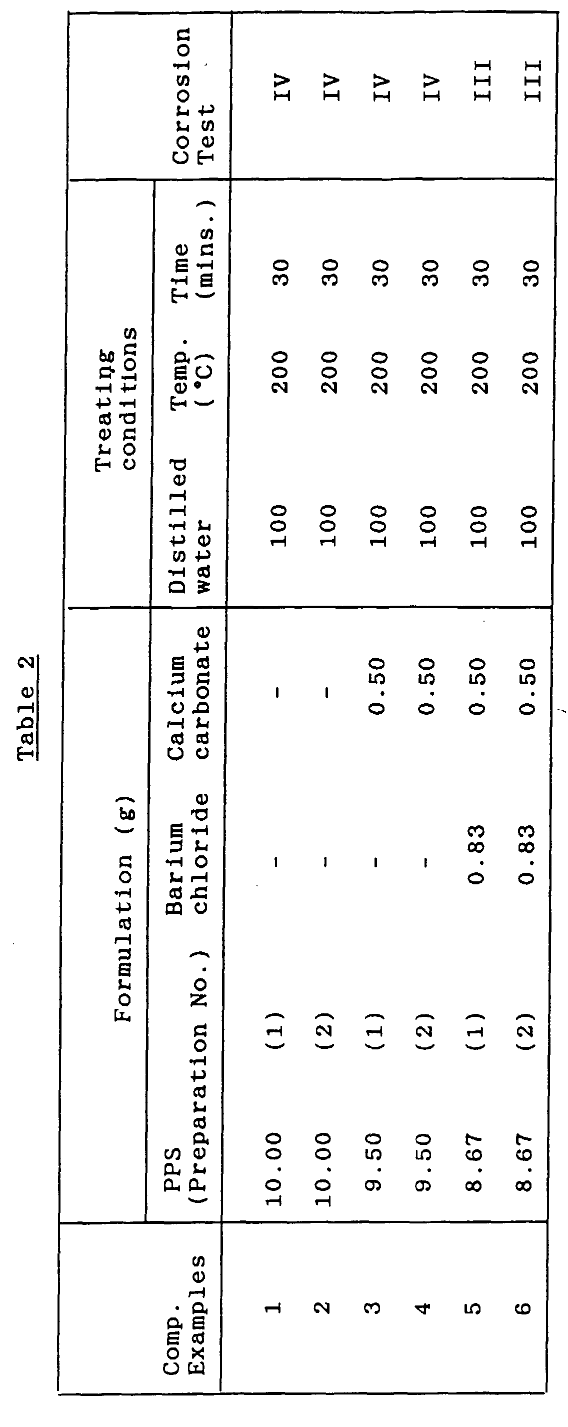

In certain of its aspects the present invention provides a method for treating polyarylene sulfide resins which comprises mixing and heating a polyarylene sulfide resin with a zinc salt characterised in that the heating is carried out in an aqueous solvent, and in that the zinc salt is zinc carbonate and in that there is optionally present an alkaline earth halide, the zinc carbonate preferably being present in a proportion of 0.01% - 10%, more preferably 0.01% - 5% weight on the basis of the total weight of the resin and zinc carbonate, and optional alkaline earth metal halide.

The invention also extends to a method for treating polyarylene sulfide resins which comprises mixing and heating a polyarylene sulfide resin with a zinc salt characterised in that the heating is carried out in an aqueous solvent, and in that the zinc salt is zinc carbonate and in that alkaline earth metal halide is present, the zinc carbonate and the alkaline earth metal halide being present in proportions of 0.01% -10%, preferably 0.1% to 5%, and 0.006% - 23.6%, preferably 0.06% - 11.8% by weight, respectively, on the basis of the total weight of the resin, zinc carbonate and alkaline earth metal halide.

The zinc carbonate is preferably represented by the formula:

xZnCO₃·yZn(OH)₂·nH₂O

where x is from 1 to 3, y is from 0 to 6 and n is from 0 to 6.

The alkaline earth metal halide is preferably a chloride, more preferably a beryllium, magnesium, calcium, strontium, barium or radium chloride and is either in the anhydrous or hydrated form; especially preferred is barium chloride in the anhydrous or hydrated form.

The aqueous solvent may comprise essentially distilled water or ion-exchanged water, or the aqueous solvent may contain a minor amount of water soluble organic solvent, preferably a water-soluble organic acid, alcohol, ketone or amide or a mixture thereof.

The total concentration of the resin and treating agent or agents in the aqueous solvent preferably ranges from 7% to 50% by weight, more preferably from 10% to 40% by weight.

The treatment is preferably conducted for a period of from 1 minute to 24 hours at a temperature of 130°C to 250°C, more preferably for a period of from 10 minutes to 10 hours at a temperature of 150°C to 220°C.

The resin, prior to treatment, is preferably one of a substantially linear structure and has a melt viscosity of 50 - 50,000 poises, e.g. 100 - 30,000 poises, as measured in a KOHKA type flow tester at 300°C using an orifice of a 0.5 mm diameter and a 2 mm length under a 10 kg load, more preferably the resin is one having a melt viscosity of 150 - 50,000 poises which has been prepared by heating and further polymerizing a polyarylene sulfide resin having a lower melt viscosity of 50 - 20,000 poises, optionally in the presence of a crosslinking agent.

The method preferably comprises a further step of removing the aqueous solvent from the treated resin and drying the resin.

The invention also extends to polyarylene sulfide resins exhibiting a decreased corrosive property which have been prepared by a method according to the invention.

## Claims

1. A method for treating polyarylene sulfide resins which comprises mixing and heating a polyarylene sulfide resin in an aqueous solvent with zinc carbonate and an alkaline earth metal halide, the zinc carbonate and the alkaline earth metal halide being present in proportions of 0.01% - 10% and 0.006% - 23.6% by weight, respectively, on the basis of the total weight of the resin, zinc carbonate and alkaline earth metal halide.

2. A method as claimed in claim 1 characterised in that the zinc carbonate is represented by the formula:
xZnCO₃.yZn(OH)₂.nH₂O
where x is from 1 to 3, y is from 0 to 6 and n is from 0 to 6.

3. A method as claimed in claim 1 or claim 2 characterised in that the alkaline earth metal halide is a chloride and is a beryllium, magnesium, calcium, strontium, barium or radium chloride or a mixture thereof, and is either in the anhydrous or hydrated form.

4. A method as claimed in any one of claims 1 to 3 characterised in that the aqueous solvent comprises essentially water.

5. A method as claimed in claim 4 characterised in that the aqueous solvent contains water soluble organic solvent.

6. A method as claimed in claim 5 characterised in that the water-soluble organic solvent is a water-soluble organic acid, alcohol, ketone or amide or a mixture thereof.

7. A method as claimed in any one of claims 1 to 6 characterised in that the total concentration of the resin and treating agent or agents in the aqueous solvent ranges from 7% to 50% by weight.

8. A method as claimed in any one of claims 1 to 7 characterised in that the treatment is conducted for a period of from 1 minute to 24 hours at a temperature of 130°C to 250°C.

9. A method as claimed in any one of claims 1 to 8 characterised in that the resin is of a substantially linear structure and has a melt viscosity of 50 - 50,000 poises as measured in a KOHKA type flow tester at 300°C using an orifice of a 0.5 mm diameter and a 2 mm length under a 10 kg load.

10. A method as claimed in any one of claims 1 to 8 characterised in that the resin is one having a melt viscosity of 150 - 50,000 poises which has been prepared by heating and further polymerizing a polyarylene sulfide resin having a lower melt viscosity of 50 - 20,000 poises, optionally in the presence of a crosslinking agent.

## Patentansprüche

1. Verfahren zum Behandeln von Polyarylensulfidharzen, welches das Mischen und Erhitzen eines Polyarylensulfidharzes in einem wäßrigen Lösungsmittel mit Zinkcarbonat und einem Erdalkalimetallhalogenid umfaßt, wobei das Zinkcarbonat und das Erdalkalimetallhalogenid in Anteilen von 0,01 Gew.-% bis 10 Gew.-% bzw. 0,006 Gew.-% bis 23,6 Gew.-%, bezogen auf das Gesamtgewicht des Harzes, Zinkcarbonats und Erdalkalimetallhalogenids vorhanden ist.

2. Verfahren nach Anspruch 1, dadurch gekennzeichnet, daß das Zinkcarbonat dargestellt ist durch die Formel:
xZnCO₃·yZn(OH)₂·nH₂O
worin x 1 bis 3 ist, y 0 bis 6 ist und n 0 bis 6 ist.

3. Verfahren nach Anspruch 1 oder 2, dadurch gekennzeichnet, daß das Erdalkalimetallhalogenid ein Chlorid ist und ein Beryllium-, Magnesium-, Calcium-, Strontium-, Barium- oder Radiumchlorid oder eine Mischung davon ist und entweder in wasserfreier oder hydratisierter Form vorliegt.

4. Verfahren nach einem der Ansprüche 1 bis 3, dadurch gekennzeichnet, daß das wäßrige Lösungsmittel im wesentlichen Wasser umfaßt.

5. Verfahren nach Anspruch 4, dadurch gekennzeichnet, daß das wäßrige Lösungsmittel ein wasserlösliches organisches Lösungsmittel enthält.

6. Verfahren nach Anspruch 5, dadurch gekennzeichnet, daß das wasserlösliche organische Lösungsmittel eine wasserlösliche organische Säure, ein wasserlöslicher Alkohol, ein wasserlösliches Keton oder ein wasserlösliches Amid oder eine Mischung davon ist.

7. Verfahren nach einem der Ansprüche 1 bis 6, dadurch gekennzeichnet, daß die Gesamtkonzentration des Harzes und Behandlungsmittels oder der Behandlungsmittel in dem wäßrigen Lösungsmittel im Bereich von 7 Gew.-% bis 50 Gew.-% liegt.

8. Verfahren nach einem der Ansprüche 1 bis 7, dadurch gekennzeichnet, daß die Behandlung für eine Zeitdauer zwischen 1 Minute bis 24 Stunden bei einer Temperatur von 130°C bis 250°C durchgeführt wird.

9. Verfahren nach einem der Ansprüche 1 bis 8, dadurch gekennzeichnet, daß das Harz eine im wesentlichen lineare Struktur und eine Schmelzviskosität von 50-50000 P besitzt, gemessen in einem Durchflußmeßgerät vom KOHKA-Typ bei 300°C unter Verwendung einer Düse mit einem Durchmesser von 0,5 mm und einer Länge von 2 mm unter einer Belastung von 10 kg.

10. Verfahren nach einem der Ansprüche 1 bis 8, dadurch gekennzeichnet, daß das Harz ein Harz mit einer Schmelzviskosität von 150-50000 P ist, welches durch Erhitzen und weiterhin Polymerisieren eines Polyarylensulfidharzes mit einer niedrigeren Schmelzviskosität von 50-20000 P, wahlweise in der Gegenwart eines Vernetzungsmittels, hergestellt worden ist.

## Revendications

1. Procédé de traitement de résines de polysulfure d'arylène, selon lequel on mélange et on chauffe une résine de polysulfure d'arylène dans un solvant aqueux avec du carbonate de zinc et un halogénure de métal alcalino-terreux, le carbonate de zinc et l'halogénure de métal alcalino-terreux étant présents respectivement selon des proportions de 0,01 % à 10 % et 0,006 % à 23,6 % en poids par rapport au poids total de la résine, du carbonate de zinc et de l'halogénure de métal alcalino-terreux.

2. Procédé selon la revendication 1, caractérisé en ce que le carbonate de zinc est de préférence représenté par la formule :
xZnCO₃.yZn(OH)₂.nH₂O
dans laquelle x varie de 1 à 3, y varie de 0 à 6 et n varie de 0 à 6.

3. Procédé selon la revendication 1 ou 2, caractérisé en ce que l'halogénure de métal alcalino-terreux est un chlorure, et il est choisi parmi le chlorure de béryllium, de magnésium, de calcium, de strontium, de baryum ou de radium, ou un mélange de ceux-ci, et il est sous forme anhydre ou hydratée.

4. Procédé selon l'une quelconque des revendications 1 à 3, caractérisé en ce que le solvant aqueux comprend principalement de l'eau.

5. Procédé selon la revendication 4, caractérisé en ce que le solvant aqueux contient un solvant organique soluble dans l'eau.

6. Procédé selon la revendication 5, caractérisé en ce que le solvant organique soluble dans l'eau, est un acide organique, un alcool, une cétone, un amide, soluble dans l'eau, ou un mélange de ceux-ci.

7. Procédé selon l'une quelconque des revendications 1 à 6, caractérisé en ce que la concentration totale de la résine et du ou des agents de traitement dans le solvant aqueux, varie de 7 % à 50 % en poids.

8. Procédé selon l'une quelconque des revendications 1 à 7, caractérisé en ce que le traitement est effectué pendant 1 minute à 24 heures à une température de 130 °C à 250 °C.

9. Procédé selon l'une quelconque des revendications 1 à 8, caractérisé en ce que la résine a une structure à peu près linéaire, et en ce qu'elle a une viscosité à l'état fondu de 50 à 50 000 poises d'après mesure dans un contrôleur d'écoulement de type KOHKA à 300 °C en employant un orifice de 0,5 mm de diamètre et de 2 mm de longueur sous une charge de 10 kg.

10. Procédé selon l'une quelconque des revendications 1 à 8, caractérisé en ce que la résine est une résine ayant une viscosité à l'état fondu de 150 à 50 000 poises ayant été préparée par chauffage puis polymérisation d'une résine de polysulfure d'arylène ayant une viscosité à l'état fondu relativement faible de 50 à 20 000 poises, éventuellement en présence d'un agent de réticulation.
